# EUROPÄISCHE PATENTANMELDUNG

(11) **EP 4 428 385 A1**
(43) Veröffentlichungstag der Anmeldung: **11.09.2024**
(21) Anmeldenummer: 23161183.1
(22) Anmeldetag: 10.03.2023
(51) Int. Cl.: F16D 11/14, F16D 13/26, F16D 13/10, F16D 41/08

(54) **REIBUNGSARME FREILAUFKUPPLUNG**

(71) Anmelder: maxon international ag, 6072 Sachseln (CH)
(72) Erfinder: Wandeler, Marco, 6018 Buttisholz (CH); Rhiner, Manuel, 6020 Emmenbrücke (CH)
(74) Vertreter: Grünecker Patent- und Rechtsanwälte PartG mbB

(57) **Zusammenfassung**

Die vorliegende Erfindung betrifft eine Freilaufkupplung zum Ein- und Auskuppeln eines Motors, mit einer mit dem Motor verbindbaren Antriebsseite, mit einer mit dem Motor koppelbaren Abtriebsseite, mit einer axial wirkenden Verzahnungskupplung und mit einer Reibeinrichtung, wobei die Antriebsseite einen entlang eines axialen Kupplungswegs zwischen einer ersten axialen Position und einer zweiten axialen Position verschiebbar angeordneten Verzahnungskörper der Verzahnungskupplung aufweist. Die Abtriebsseite weist eine in der zweiten axialen Position mit dem Verzahnungskörper verbundenen Verzahnungsbereich der Verzahnungskupplung auf. Die Reibkupplung steht mit dem Verzahnungskörper in Wirkbeziehung. Die Reibeinrichtung ist als Reibkupplung ausgebildet, die ein erstes Reibkupplungsteil mit einem Reibbereich umfasst und ein zweites Reibkupplungsteil, welches einen Reibbereich umfasst, welcher mit dem mindestens einen Reibbereich des ersten Reibkupplungsteils in Reibkontakt bringbar ist. Die Reibkupplung ist derart konfiguriert, dass der mindestens eine Reibbereich des ersten Reibkupplungsteils beim Verschieben des Verzahnungskörpers von der ersten axialen Position zur zweiten axialen Position und/oder von der zweiten axialen Position zur ersten axialen Position in mindestens einer Zwischenposition des axialen Kupplungswegs des Verzahnungskörpers sich relativ zu dem zweiten Reibkupplungsteil bewegt ist und eine Drehhemmung auf den Verzahnungskörper ausübt und in der zweiten axialen Position des Verzahnungskörpers das erste Reibkupplungsteil außer Kontakt mit dem zweiten Reibkupplungsteil gebracht ist. Die Erfindung bezieht sich auch auf eine Antriebsvorrichtung mit einer solchen Freilaufkupplung sowie auf ein Fahrrad mit einer solchen Antriebsvorrichtung.

## Beschreibung

Die vorliegende Erfindung betrifft eine Freilaufkupplung zum Ein- und Auskuppeln eines (z.B. unterstützenden) Motors, mit einer mit dem Motor verbindbaren Antriebsseite, mit einer mit dem Motor koppelbaren Abtriebsseite, mit einer axial wirkenden Verzahnungskupplung und mit einer Reibeinrichtung, wobei die Antriebsseite einen entlang eines axialen Kupplungswegs zwischen einer ersten axialen Position und einer zweiten axialen Position verschiebbar angeordneten Verzahnungskörper der Verzahnungskupplung aufweist, und wobei die Abtriebsseite eine in der zweiten axialen Position mit dem Verzahnungskörper verbundenen Verzahnungsbereich der Verzahnungskupplung aufweist, und wobei die Reibeinrichtung mit dem Verzahnungskörper in Wirkbeziehung steht.

Ein Freilauf ist zum Beispiel aus der DE 10 2019 215 712 A1 bekannt. Dieser Freilauf wird zum Beispiel in einem Fahrrad mit einem Hilfsantrieb (Pedelec) eingesetzt. Der dort beschriebene Freilauf umfasst eine Antriebswelle und eine Abtriebswelle, wobei die Antriebswelle eine Kurbelwelle des Fahrrads oder eine Welle des Elektromotors sein kann, während die Abtriebswelle mit dem Zahnblatt des Fahrrads verbunden ist. Aufgrund der gezeigten Konstruktion sind mindestens zwei derartige Freiläufe notwendig. Der Freilauf umfasst einen zwischen einer ersten axialen Position und einer zweiten axialen Position verschiebbar auf der ersten Welle gelagerten Freilauf körper, der bevorzugt eine Sägezahnverzahnung aufweist. Der Freilaufkörper und die Abtriebswelle sind in der ersten axialen Position des Freilaufkörpers voneinander entkoppelt und in der zweiten axialen Position form- und/oder kraftschlüssig miteinander verbunden. Hierzu weist die Abtriebswelle ebenfalls bevorzugt eine entsprechende mit dem Freilaufkörper koppelbare Sägezahnverzahnung auf. Der Freilauf verfügt weiter über ein Gegenlager und über eine Verschiebeeinrichtung. Durch diese kann der Freilaufkörper bei einer Rotation der Antriebswelle gegenüber dem Gegenlager in eine erste Richtung in die zweite axiale Position bewegt werden. Bei einer Rotation der Antriebswelle gegenüber dem Gegenlager in eine zweite Richtung erfolgt die Verschiebung des Freilaufkörpers in eine zweite Richtung. Die erste und die zweite Richtung sind entgegengesetzt. Zum Verschieben des Freilaufkörpers ist dieser über ein zur Verschiebeeinrichtung gehörendes Gewinde mit der Antriebswelle verbunden, so dass bei einer Drehung des Freilaufkörpers gegenüber der Antriebswelle eine Verschiebung des Freilaufkörpers zwischen der ersten axialen Position und der zweiten axialen Position erfolgt. Ein mit dem Gegenlager verbundenes Reibelement steht in Reibkontakt mit dem Freilaufkörper, so dass bei einer relativen Rotation des Freilaufkörpers zum Gegenlager ein Drehmoment auf den Freilaufkörper wirkt, das zur Drehung des Freilaufkörpers gegenüber der Antriebswelle und damit zur Verschiebung des Freilaufkörpers zwischen der ersten axialen Position und der zweiten axialen Position führt. Das Reibelement ist in axialer Richtung am Gegenlager verschiebbar angeordnet und mittels einer Anpressfeder in Richtung des Freilaufkörpers vorgespannt. Nachteilig an dieser Konstruktion ist, dass aufgrund der Anpressfeder und des Reibelements sowohl in der ersten axialen Position als auch in der zweiten axialen Position ein stetiges Reibmoment auf den Freilaufkörper wirkt, das zu Wirkungsgradverlusten führt.

Es ist daher die Aufgabe der vorliegenden Erfindung, eine Freilaufkupplung der eingangs genannten Art bereitzustellen, die einen besseren Wirkungsgrad aufweist.

Diese Aufgabe wird durch eine Freilaufkupplung gemäß Anspruch 1 gelöst. Hierzu ist bei einer gattungsgemäßen Freilaufkupplung die Reibeinrichtung als Reibkupplung ausgebildet. Die Reibkupplung weist ein erstes Reibkupplungsteil, welches mindestens einen Reibbereich umfasst und ein zweites Reibkupplungsteil, welches einen Reibbereich umfasst, welcher mit dem mindestens einen Reibbereich des ersten Reibkupplungsteils in Reibkontakt bringbar ist. Die Reibkupplung ist derart konfiguriert, dass der mindestens eine Reibbereich des ersten Reibkupplungsteils beim Verschieben des Verzahnungskörpers von der ersten axialen Position zur zweiten axialen Position und/oder von der zweiten axialen Position zur ersten axialen Position in mindestens einer Zwischenposition des axialen Kupplungswegs des Verzahnungskörpers sich relativ zu dem zweiten Reibkupplungsteil bewegt und eine Drehhemmung auf den Verzahnungskörper ausübt und der zweiten axialen Position des Verzahnungskörpers das erste Reibkupplungsteil außer Kontakt mit dem zweiten Reibkupplungsteil gebracht ist. Hierdurch wird bevorzugt ein dauerhafter Reibkontakt sowohl in der ersten axialen Position als auch in der zweiten axialen Position des Verzahnungskörpers vermieden und es können ausgewählte axiale Positionen oder Abschnitte des axialen Kupplungswegs des Verzahnungskörpers reibfrei bzw. reibarm sein, wodurch sich der Wirkungsgrad der Freilaufkupplung erhöht. Die gewünschte Drehhemmung, die auf den Verzahnungskörper ausgeübt werden soll, braucht zum Beispiel nur über den Abschnitt des axialen Kupplungswegs wirken, wo sie zwingend zur Verschiebung des Verzahnungskörpers benötigt wird. In den anderen Bereichen kann die Reibkupplung entkoppelt sein. Im eingekuppelten Bereich in der zweiten axialen Position, ist die Reibkupplung entkuppelt. Die Reibkupplung ist dabei frei von Gleitreibung. Unter einer Wirkbeziehung ist die zur Funktionsausübung bereitgestellte zumindest temporäre (mechanische, magnetische, etc.) Interaktion der beteiligten Bestandteile (Reibeinrichtung oder Verzahnungskörper) der Freilaufkupplung zu verstehen.

Zum Beispiel können der Verzahnungskörper und der Verzahnungsbereich der Verzahnungskupplung, sobald diese in Eingriff geraten, selbst die erforderliche Drehhemmung aufbringen, so dass dann die Reibkupplung für das weitere Verschieben des Verzahnungskörpers nicht mehr benötigt wird. Am vorteilhaftesten ist selbstverständlich ein vollständiges Unterbinden der Reibung; jedoch werden schon erhebliche Vorteile bei einer Verringerung der Reibleistung, zum Beispiel um mindestens 50 %, erzielt, z.B. durch eine verringerte Anpresskraft des mindestens einen Reibbereichs auf das zweite Reibkupplungsteil.

Bevorzugt kann die mindestens eine Zwischenposition des axialen Kupplungswegs die erste und/oder die zweite axiale Position des Verzahnungskörpers umfassen bzw. von dieser gebildet sein. Hier kommt es maßgeblich darauf an, wie die Freilaufkupplung wirken soll und in welcher Richtung Drehmomente zu übertragen sind. Die Reibkupplung kann auch so angeordnet werden, dass in bestimmten Abschnitten oder an bestimmten Stellen (vorzugsweise die erste und/oder zweite axiale Position) der mindestens eine Reibbereich des ersten Reibkupplungsteils relativ zum zweiten Reibkupplungsteil stillsteht. Dreht sich zum Beispiel der Motor nicht und sind Antriebsseite und Abtriebsseite durch die Freilaufkupplung entkoppelt, tritt zum Beispiel keine Reibung auf, weil dann die beiden Reibkupplungsteile relativ zueinander stillstehen können. Gleiches ist auch bei eingekoppeltem Zustand möglich. Es kommt hier jeweils auf die Konfiguration der Reibkupplung an.

Günstigerweise kann die Zwischenposition des axialen Kupplungswegs zwischen der ersten und der zweiten axialen Position des Verzahnungskörpers liegen. Nachdem die Drehhemmung möglichst beim Verschieben des Verzahnungskörpers aufgebracht werden soll, spielt der Reibkontakt auch hauptsächlich bzw. ausschließlich zwischen diesen beiden axialen Positionen eine Rolle.

In einer vorteilhaften Ausgestaltung ist vorgesehen, dass das erste Reibkupplungsteil derart ausgestaltet ist, dass der mindestens eine Reibbereich radial an- und/oder ausfedernd ausgestaltet ist. Anfedernd bedeutet, dass das federnde Element in Kontakt mit dem zweiten Reibkupplungsteil steht. Ausfedernd bedeutet, dass das federnde Element nicht in Kontakt ist mit dem zweiten Reibkupplungsteil. Zum einen können aufgrund dieser Federwirkung die Reibkräfte gezielter eingestellt werden. Zum anderen kann diese Federbewegung auch zum Ein- und Auskuppeln der beiden Reibkupplungsteile genutzt werden.

Von Vorteil ist es darüber hinaus, wenn gemäß einer Ausführungsform das zweite Reibkupplungsteil eine umlaufende Reibfläche aufweist, die mit dem mindestens einen Reibbereich des ersten Reibkupplungsteils in und außer Kontakt bringbar ist. Der Reibbereich des ersten Reibkupplungsteils kann dann hinsichtlich der Reibungsverhältnisse optimiert werden, während eine umlaufende Reibfläche insbesondere für Drehbewegungen um eine Achse sehr vorteilhaft ist. Die Anzahl der Reibbereiche kann dann jeweils den Gegebenheiten und den Reibverhältnissen angepasst werden, so dass auch kleinere Reibbereiche eingesetzt werden können.

Gemäß einer weiteren Ausgestaltung ist vorgesehen, dass die Breite einer wirksamen Reibfläche zwischen erstem und zweitem Reibkupplungsteil kleiner ist als der axiale Kupplungsweg. Hierdurch wird sichergestellt, dass durch die reine axiale Bewegung des Verzahnungskörpers die beiden Reibkupplungsteile außer Eingriff geraten können.

Bei einer weiteren Ausführungsform ist vorgesehen, dass der Verzahnungskörper mittels einer Wendelnutführung auf einem Wellenzapfen der Antriebsseite verschiebbar geführt ist. Die Richtung der Wendelnut gibt vor, in welche Richtung sich der Verzahnungskörper aufgrund welcher Drehrichtungen bewegen kann, die an der Antriebsseite oder Abtriebsseite vorliegen. Eine Wendelnutführung ist äußerst robust und einfach herzustellen und bringt die notwendige Leichtgängigkeit mit sich.

Bevorzugt können der Verzahnungskörper und der Verzahnungsbereich der Verzahnungskupplung eine komplementäre Sägezahnprofilierung aufweisen, wobei z.B. die axiale Höhe der Sägezahnprofilierung des Verzahnungskörpers größer sein kann als der axiale Kupplungsweg abzüglich der Breite der wirksamen Reibfläche. Hierdurch könnte sichergestellt werden, dass über den gesamten Kupplungsweg eine Drehhemmung, entweder von der Reibkupplung oder von der Verzahnung, aufgebracht ist.

Eine weitere Variante sieht vor, dass eine axial wirkende Rückstelleinrichtung vorgesehen ist, die eine axiale Rückstellkraft auf den Verzahnungskörper ausübt, wobei mittels der Rückstellkraft der Verzahnungskörper im Betriebszustand fehlender Motorunterstützung in seine erste axiale Position bewegbar ist. Bei fehlender Motorunterstützung können der Verzahnungskörper und der Verzahnungsbereich entkoppeln und müssen nicht notwendigerweise gekoppelt bleiben. Die Rückstelleinrichtung sorgt in Abhängigkeit der gewählten axialen Rückstellkraft für die notwendige Rückstellung des Verzahnungskörpers.

Günstigerweise kann die Rückstelleinrichtung eine axial oder achsparallel wirkende Federeinrichtung aufweisen, die sich einseitig an der Abtriebsseite abstützt, und eine Rotationsentkopplungseinrichtung aufweist, wobei sich die Federeinrichtung anderseitig unter Zwischenschaltung der Rotationsentkopplungseinrichtung an dem Verzahnungskörper abstützt, und wobei die Rotationsentkopplungseinrichtung eine Lagereinrichtung umfasst, mittels derer die Federeinrichtung und der Verzahnungskörper reibarm bzw. frei von Gleitreibung relativ zueinander um die Kupplungsachse verdrehbar sind. Die Federeinrichtung übt zwar in aller Regel eine stetige Federkraft auf den Verzahnungskörper aus. Aufgrund der gewählten Konstruktion können sich aber die Federeinrichtung und der Verzahnungskörper relativ zueinander bewegen, ohne dass nennenswerte Reibung auftritt. Durch eine entsprechende Ausgestaltung der Lagereinrichtung bspw. mit einem Wälzlager können Reibkräfte sinnvoll auf ein Minimum reduziert werden. Ein Wälzlager ist mehr oder weniger frei von Gleitreibung. Die Wälzkörper rollen über die Lageroberfläche, es besteht nur eine Rollreibung zwischen den Wälzkörpern und der Lageroberfläche.

Des Weiteren kann der Verzahnungskörper verdrehfest mit dem ersten Reibkupplungsteil verbunden oder einteilig mit diesem ausgestaltet sein, wobei das zweite Reibkupplungsteil mit der umlaufenden Reibfläche mit einem Kupplungsgehäuse verbunden ist. Das erste Reibkupplungsteil bewegt sich demnach automatisch mit dem Verzahnungskörper mit und kann hierdurch außer Eingriff mit dem zweiten Reibkupplungsteil gelangen.

Bei einer weiteren Ausführungsform ist vorgesehen, dass die Rotationsentkopplungseinrichtung an der Antriebsseite derart geführt ist, dass zwischen der ersten axialen Position und der zweiten axialen Position des Verzahnungskörpers eine Verlagerung der Achse der Rotationsentkopplungseinrichtung relativ zur Achse des Verzahnungskörpers stattfindet und somit eine Auskopplungshemmung für die Verzahnungskupplung bewirkt ist. Die Verzahnungsprofile des Verzahnungskörpers und des Verzahnungsbereichs werden hierdurch etwas gegeneinander verschoben, so dass diese Auskopplungshemmung stattfindet. Hierdurch kann zum Beispiel verhindert werden, dass bei leichter Talfahrt, bei der das Antriebsdrehmoment ungefähr bei 0 liegt, ein Auskuppeln der Verzahnungskupplung nicht sofort stattfindet. Prinzipiell ist diese Funktion auch durch eine so genannte Hinterschleifung der Verzahnungsprofilierung zu erreichen, zum Beispiel eine Hinterschleifung der senkrechten Sägezahnflanken. Eine solche Ausgestaltung ist jedoch frästechnisch sehr aufwendig.

Bei einer weiteren Variante ist vorgesehen, dass das zweite Reibkupplungsteil von dem Verzahnungskörper gebildet ist oder mit diesem fest verbunden ist und das erste Reibkupplungsteil feststehend, bevorzugt an einem Kupplungsgehäuse, angeordnet ist. Sofern der Verzahnungskörper selbst das zweite Reibkupplungsteil bildet, kann auf ein Bauelement verzichtet werden. Hinsichtlich des Verschleißes kann es jedoch auch von Vorteil sein, wenn zumindest der der Reibung ausgesetzte Bereich von einem entsprechenden reibarmen Material oder einem zusätzlichen Bauteil, zum Beispiel einem Reibring, gebildet ist.

Von besonderem Vorteil ist es gemäß einer weiteren Ausgestaltung jedoch, wenn das erste Reibkupplungsteil einen dem mindestens einen Reibbereich zugeordneten Permanentmagneten aufweist und das zweite Reibkupplungsteil ferromagnetisch (oder weichmagnetisch) ausgestaltet ist. Insbesondere im Zusammenspiel mit einer beweglichen bzw. federnden Anordnung des mindestens einen Reibbereichs kann aufgrund der Verwendung des Permanentmagneten ein automatisches Einkoppeln erzeugt werden, sobald das zweite Reibkupplungsteil in den Einzugsbereich des mindestens einen Permanentmagneten kommt. Das zweite Reibkupplungsteil kann auch eine geeignete Profilierung aufweisen, so dass über den axialen Kupplungsweg unterschiedliche Abstände zum mindestens einen Reibbereich des ersten Reibkupplungsteils vorhanden sind. Aufgrund dieser Abstände kommt es dann zu einem Reibkontakt aufgrund der magnetischen Anziehung oder aufgrund eines zu großen Abstands nicht zu einem Reibkontakt. Durch die Permanentmagnete wird das erste Reibkupplungsteil an das zweite Reibkupplungsteil gezogen, wodurch sich der Reibbereich des ersten Reibkupplungsteils auf dem Reibbereich des zweiten Reibkupplungsteils reibt bzw. bewegt. Die magnetische Kraft führt zu einer Anpresskraft, wodurch die Reibung zwischen den Reibbereichen erhöht wird.

Bei einer weiteren Ausführungsform ist vorgesehen, das ein drittes Reibkupplungsteil mit mindestens einem Reibbereich vorgesehen ist, das im Abstand zum ersten Reibkupplungsteil versetzt entlang der Kupplungsachse und mit der Abtriebsseite verbunden angeordnet ist, wobei das erste Reibkupplungsteil im Bereich der ersten axialen Position mit dem zweiten Reibkupplungsteil in Reibkontakt steht und das dritte Reibkupplungsteil im Bereich der ersten axialen Position außer Kontakt mit dem zweiten Reibkupplungsteil steht, und wobei das dritte Reibkupplungsteil im Bereich der zweiten axialen Position im Reibkontakt mit dem zweiten Reibkupplungsteil steht und das erste Reibkupplungsteil im Bereich der zweiten axialen Position außer Kontakt mit dem zweiten Reibkupplungsteil steht. Mit einer solchen Anordnung kann zum Beispiel die Drehhemmung im Wesentlichen über den gesamten axialen Kupplungsweg auf den Verzahnungskörper ausgeübt werden. Darüber hinaus kann das dritte Reibkupplungsteil mit dem mindestens einen Reibbereich so ausgelegt sein, dass in der zweiten axialen Position eine Auskopplungshemmung für die Verzahnungskupplung bewirkt ist. Dennoch kann aufgrund einer geschickten Anordnung des ersten und dritten Reibkupplungsteils und der entsprechend zugeordneten Abstandkonturierung des zweiten Reibkupplungsteils aufgrund der magnetischen Kraftvektoren eine axiale Rückstellkraft auf den Verzahnungskörper ausgeübt werden. Demnach wäre dann die Rückstelleinrichtung von dem oder den Permanentmagneten des ersten Reibkupplungsteils gebildet und ggf. des oder den Permanentmagneten des dritten Reibkupplungsteils, sofern dem mindestens einen Reibbereich des dritten Reibkupplungsteils ein entsprechender Permanentmagnet oder mehrere Permanentmagnete zugeordnet ist bzw. sind. Bei der Verwendung eines dritten Reibkupplungsteils ist anzumerken, dass das zweite Reibkupplungsteil auch mehrteilig aufgebaut sein kann, zum Beispiel durch die Verwendung von zwei im Abstand zueinander auf dem Verzahnungskörper angeordneter Reibringe.

Die Erfindung betrifft im Wesentlichen eine Freilaufkupplung, die einen Ein- und Auskopplungsmechanismus für einen Motor bereitstellt. Bei einem Elektrofahrrad (Pedelec) wird das Fahrrad entweder durch alleinige Muskelkraft angetrieben oder der Fahrer wird durch einen Antrieb (Motor) unterstützt. Dabei sind folgende Betriebszustände relevant:
1 Fahrer tritt, Motor unterstützt
2 Fahrer tritt nicht, Motor unterstützt nicht (bergab, ausrollen, schieben)
3 Fahrer tritt schneller als der Motor, Motor unterstützt nicht
4 Fahrer tritt rückwärts oder rückwärts schieben, Motor unterstützt nicht, Motor soll nicht bewegt werden
5 Fahrer tritt, Motor unterstützt nicht (Batterie leer, Motor ausgeschaltet oder defekt)

Die allgemeine Funktion des Antriebs ist es, den Fahrradfahrer beim Treten zu unterstützen und ihn auf höhere Geschwindigkeit zu bringen. Dem Motor wird durch die Kraft des Tretens in die Pedale signalisiert, dass es einer Unterstützung bedarf und der Motor mittels der Freilaufkupplung bzw. des Einkupplungsmechanismus einkuppeln soll. Somit wird der Fahrer bis zu einer definierten Geschwindigkeit durch den Motor unterstützt. Sobald jedoch der Fahrer schneller fährt als die maximale Unterstützungsgeschwindigkeit, soll sich der Motor mechanisch wieder auskuppeln. Ebenso soll der Motor auskuppeln, wenn der Fahrradfahrer rückwärts tritt, die Batterien leer sind, der Motor ausgeschaltet ist oder das Fahrrad geschoben wird.

Dabei ist im Wesentlichen allen oben genannten Betriebszuständen gemein, dass der Motor eingekuppelt wird, wenn er unterstützend wirken soll, und ausgekuppelt wird, wenn er nicht unterstützen soll (evtl. mit Ausnahme leichter Bergabfahrt bei Drehmoment ca. 0). Die Freilaufkupplung dient dabei als mechanisches Kupplungselement zwischen der Antriebsseite (Motorseite) und der Abtriebsseite (Tretlager, Pedale).

Die Erfindung kann sich auch auf eine Antriebsvorrichtung für ein personenangetriebenes Fahrzeug mit einem unterstützenden Elektromotor richten. Die Antriebsvorrichtung weist eine mit dem Elektromotor verbundene Antriebswelle, eine Abtriebswelle und einen zwischen der Antriebswelle und der Abtriebswelle wirkenden Freilaufkupplung nach einem der Ansprüche 1-15 auf, wobei ein Verzahnungskörper der Verzahnungskupplung der Freilaufkupplung auf der Antriebswelle angeordnet ist und ein Verzahnungsbereich der Verzahnungskupplung der Freilaufkupplung an der Abtriebswelle angeordnet ist.

Darüber hinaus kann sich die Erfindung auch auf ein Fahrrad mit einer Antriebsvorrichtung nach Anspruch 16 beziehen.

Im Folgenden werden nunmehr Ausführungsbeispiele der vorliegenden Erfindung anhand von Zeichnungen näher erläutert. Es zeigen:
- Figur 1: eine erste Ausführungsform einer erfindungsgemäßen Freilaufkupplung im Vollschnitt,
- Figur 2: eine Ausführungsform eines ersten Reibkupplungsteils in einer perspektivischen Darstellung,
- Figur 3: einen vergrößerten Ausschnitt der Freilaufkupplung aus Figur 1 in einer ersten axialen Position und im perspektivischen Vollschnitt,
- Figur 4: einen vergrößerten Ausschnitt der Freilaufkupplung aus Figur 1 in einer zweiten axialen Position und in einem perspektivischen Vollschnitt,
- Figur 5: eine Prinzipskizze der auf den Verzahnungskörper einwirkenden Magnetkräfte,
- Figur 6: eine zweite Ausführungsform einer erfindungsgemäßen Freilaufkupplung im Vollschnitt,
- Figur 7: eine zweite Ausführungsform eines ersten Reibkupplungsteils in perspektivischer Darstellung dem sog. FKG (Festkörpergelenk),
- Figur 8: einen vergrößerten Ausschnitt einer zweiten Ausführungsform einer Freilaufkupplung in einer ersten axialen Position und im perspektivischen Vollschnitt und
- Figur 9: einen vergrößerten Ausschnitt der zweiten Ausführungsform einer Freilaufkupplung in einer zweiten axialen Position und in einem perspektivischen Vollschnitt.

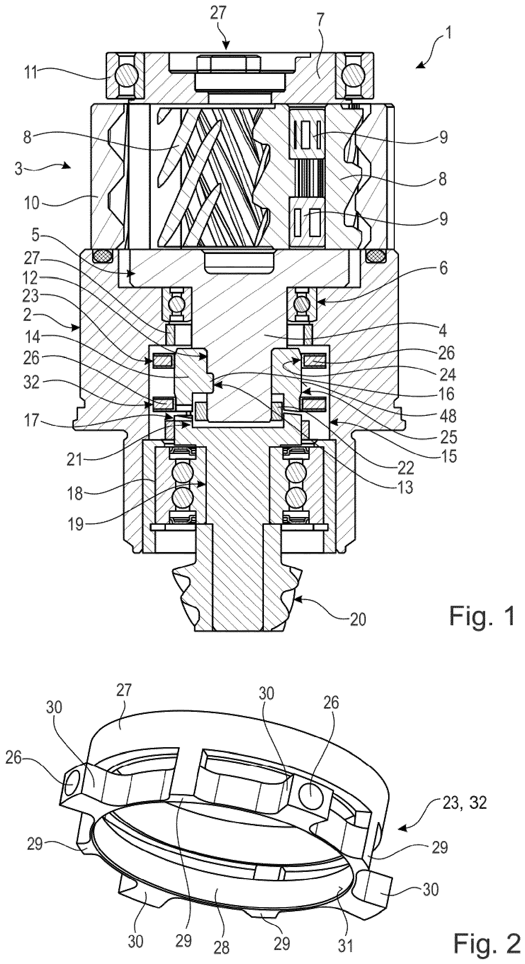

In Figur 1 ist ein Freilaufkupplung 1 dargestellt, die in einem Fahrrad mit elektrischem Hilfsmotor verwendet werden kann. Die Freilaufkupplung 1 weist ein Kupplungsgehäuse 2 auf, das die wesentlichen Komponenten der Freilaufkupplung 1 aufnimmt und an das auf der Antriebsseite ein dem nicht dargestellten Motor vorgeschaltetes Planetengetriebe 3 angeflanscht ist. In dem Kupplungsgehäuse 2 ist auf der Antriebsseite der Wellenzapfen 4 der Antriebswelle 5 drehbar gelagert. Hierzu dient das Wälzkörperlager 6. Die Antriebswelle 5 dient zusammen mit dem Planetenträger 7 zur drehbaren Befestigung der Planetenräder 8 des Planetengetriebes 3. Hierzu erstrecken sich nicht näher dargestellte Lagerzapfen zwischen der Antriebswelle 5 und dem Planetenträger 7, auf denen die Planetenräder 8 mittels der Lager 9 drehbar angeordnet sind. Die Planetenräder 8 weisen eine Wendelverzahnung auf. Die Planetenräder 8 stehen mit dem außen umgebenden, ringförmigen Hohlrad 10 des Planetengetriebes 3 in Eingriff. Der Planetenträger 7 ist in einem angrenzenden, nicht näher dargestellten Gehäuse mittels des Wälzkörperlagers 11 zusammen mit der Antriebswelle 5 drehbar gelagert. Der Planetenträger 7 weist eine zentrale Öffnung auf, durch die eine Motorwelle des nicht dargestellten Motors hindurchgeführt ist. Auf der vorstehenden Motorwelle ist ein Sonnenrad angeordnet, das als Bestandteil des Planetengetriebes 3 im Zentrum mit den Planetenrädern 8 in Eingriff kommt. Aufgrund dieser Anordnung besteht eine untersetzte Verbindung zwischen der Motorwelle und der Antriebswelle 5 unter Zwischenschaltung des Planetengetriebes 3.

Der Wellenzapfen 4 der Antriebswelle 5 weist an seinem einer Verzahnungskupplung 15 zugewandten Ende einen im Durchmesser kleineren Abschnitt 12 auf, in dem eine Wendelnut 13 angeordnet ist. Auf dem kleineren Abschnitt 12 ist ein Verzahnungskörper 14, der Bestandteil der Verzahnungskupplung 15 ist, verschiebbar angeordnet. Der hülsenförmige Verzahnungskörper 14 weist auf seiner Innenfläche einen wendelförmigen Gewindesteg 16 bzw. Spiralsteg auf, der passgenau in die Wendelnut 13 passt, so dass durch relative Verdrehung des Verzahnungskörpers 14 zur Antriebswelle 5 sich der Verzahnungskörper 14 relativ zur Antriebswelle 5 nach Art eines Gewindes axial verschieben lässt. An seinem vorderen Ende ist der Verzahnungskörper 14 mit einer Profilverzahnung 17 in Form einer Sägezahnprofilierung versehen.

Auf der Abtriebsseite ist mittels eines Wälzkörperlagers 18 eine Abtriebswelle 19 drehbar im Kupplungsgehäuse 2 angeordnet. Am aus dem Kupplungsgehäuse 2 hinausragenden Ende der Abtriebswelle 19 ist ein Spiralkegelrad 20 angeordnet, das mit einem entsprechenden nicht dargestellten Gegenkegelrad in Eingriff steht. Es kann sich hierbei bevorzugt um ein auf der Drehkurbelwelle eines Fahrrads angeordnetes Kegelrad handeln. Das im Inneren des Kupplungsgehäuses 2 angeordnete Ende der Abtriebswelle 19 ist mit einem stirnseitig angeordneten Verzahnungsbereich 21, in Form einer Sägezahnprofilierung versehen, die komplementär zur Profilverzahnung 17 des Verzahnungskörpers 14 ausgebildet ist. Dieses Ende der Abtriebswelle 19 und der Verzahnungskörper 14 bilden zusammen die Verzahnungskupplung 15. Der Bereich der Profilverzahnung 17 an dem Verzahnungskörper 14 und auch der Verzahnungsbereich 21 an der Abtriebswelle 19 weisen eine Aussparung mit einem Innendurchmesser auf, der größer ist als der Außendurchmesser des verkleinerten Abschnitts 12. Auf dem verkleinerten Abschnitt 12 ist am Ende der Antriebswelle 5 ein Sicherungsring 22 aufgepresst, der insbesondere vor und beim Zusammenbau der Freilaufkupplung 1 den Verzahnungskörper 14 auf der Antriebswelle 5 sichert.

In Figur 1 ist die Verzahnungskupplung 15 in ihrer ausgekuppelten Stellung, d.h. in der ersten axialen Position, dargestellt. Die Drehrichtungen der einzelnen Komponenten, nämlich des nicht dargestellten Elektromotors, der Antriebswelle 5 und auch die Steigungsrichtung der Wendelnut 13 sind aufeinander abgestimmt, so dass es je nach Bauart zu einem Einkuppeln der Verzahnungskupplung 15 kommt, wenn sich die Antriebswelle 5 im Uhrzeigersinn oder gegen den Uhrzeigersinn dreht. Die Sägezahnprofilierung der Profilverzahnung 17 und des Verzahnungsbereichs 21 sind ebenfalls an diese Drehrichtungen angepasst und entsprechend ausgeformt.

Bei der in der Figur 1 gezeigten Ausführungsform besteht der Verzahnungskörper 14 aus einem ferromagnetischen Material. Deshalb übernimmt der Verzahnungskörper 14 im vorliegenden Fall eine Doppelfunktion. Der Verzahnungskörper 14 stellt auch gleichzeitig das zweite Reibkupplungsteil 25 der Reibkupplung 24 mit Reibbereich 48 dar. Das erste Reibkupplungsteil 23 wird von einem federnden Magnetring gebildet, der im vorliegenden Fall mit insgesamt vier gleichmäßig am Umfang verteilt angeordneten Permanentmagneten 26 bestückt ist. Das erste Reibkupplungsteil 23 weist zwei parallel zueinander angeordnete Ringabschnitte 27 und 28 auf. Der erste Ringabschnitt 27 ist mit dem zweiten Ringabschnitt 28 über vier gleichmäßig verteilte Stege 29 verbunden, so dass die beiden Ringabschnitte 27 und 28 auf Abstand gehalten werden. Der zweite Ringabschnitt 28 ist dünner ausgestaltet und somit federelastisch ausgeprägt, wobei mittig zwischen den Stegen 29 Aufnahmevorsprünge 30 zur Aufnahme der zylinderförmigen Permanentmagnete 26 vorgesehen sind. Die Zylinderachsen der Permanentmagnete 26 weisen radial nach außen. Die Permanentmagnete sind axial magnetisiert, Dies bedeutet, die gegenüberliegenden N- und S-Pole liegen an den axialen Enden der Permanentmagneten.

Das erste Reibkupplungsteil 23 ist mittels des ersten Ringabschnitts 27 in das Kupplungsgehäuse 2 eingepresst, wodurch das erste Reibkupplungsteil 23 relativ zum Kupplungsgehäuse 2 stillsteht. In der in Figur 1 dargestellten Stellung ist das zweite Reibkupplungsteil 25, d.h. der Verzahnungskörper 14 in die Öffnung des zweiten Ringabschnitts 28 des ersten Reibkupplungsteils 23 hineingeschoben. Die Anziehungskraft zwischen den Permanentmagneten 26 und dem Verzahnungskörper 14 ist so stark, dass die Aufnahmevorsprünge 30 aufgrund ihrer elastischen Anordnung am zweiten Ringabschnitt 28 auf den Außenumfang des Verzahnungskörpers 14 aufgedrückt werden. Hierdurch bilden die Innenseiten der Aufnahmevorsprünge 30 Reibbereiche 31 des ersten Reibkupplungsteils 23 aus.

Die dargestellte Ausführungsform weist ein drittes Reibkupplungsteil 32 auf, das identisch zum ersten Reibkupplungsteil 23 ausgebildet ist. Dieses dritte Reibkupplungsteil 32 ist mit seinem ersten Ringabschnitt 27 auf den Außenumfang des Verzahnungsbereichs 21 der Abtriebswelle 19 aufgepresst. Der erste Ringabschnitt 27 des dritten Reibkupplungsteil 32 weist spiegelsymmetrisch zum ersten Ringabschnitt 27 des ersten Reibkupplungsteils 23 in Richtung des Verzahnungskörpers 14. Allerdings ist in der dargestellten ersten axialen Position des Verzahnungskörpers 14 der Abstand zwischen dem zweiten Ringabschnitt 28 des dritten Reibkupplungsteils 32 zum Verzahnungskörper 14 größer als beim ersten Reibkupplungsteil 23, so dass die Permanentmagnete 26 beim dritten Reibkupplungsteil 32 noch nicht zu einer entsprechenden federelastischen Verformung des zweiten Ringabschnitts 28 des dritten Reibkupplungsteils 32 führen und somit die Reibbereiche 31 des dritten Reibkupplungsteils 32 nicht zur Anlage am Außenumfang des zweiten Reibkupplungsteils 25, d.h. des Verzahnungskörpers 14 kommen.

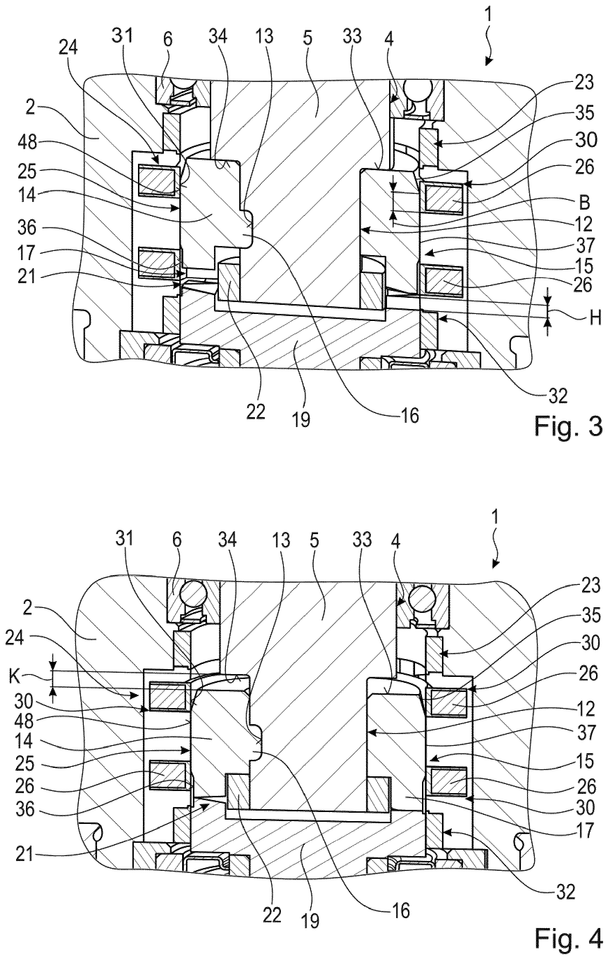

Die Wirkungsweise der Reibkupplung 24 und der gesamten Freilaufkupplung 1 wird nunmehr im Folgenden unter Zuhilfenahme der Figuren 3 bis 5 näher erläutert.

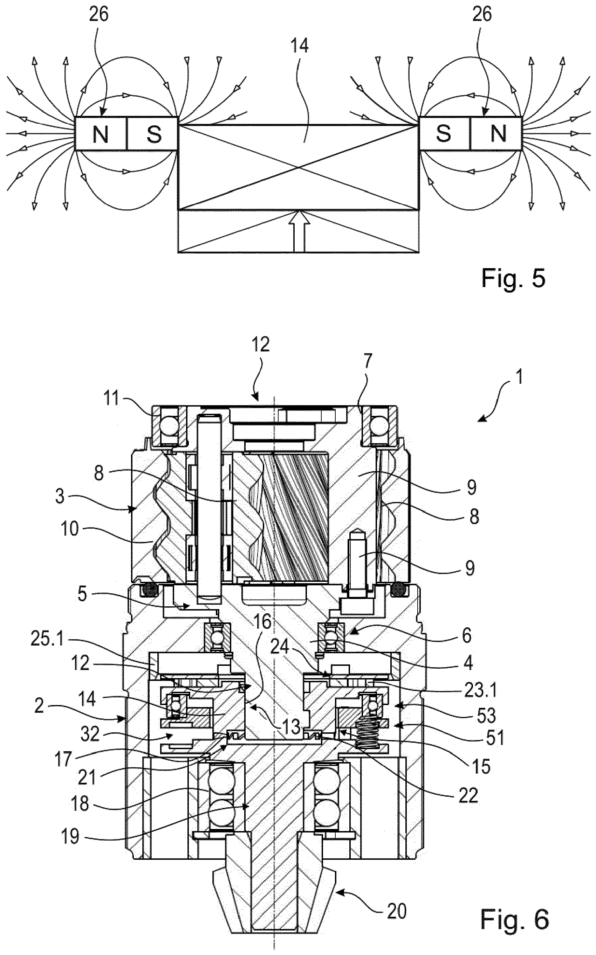

In der Figur 3 ist der Verzahnungskörper 14 in der ersten axialen Position dargestellt, d.h. die Verzahnungskupplung 15 ist ausgekuppelt und die Antriebswelle 5 und die Abtriebswelle 19 sind entsprechend nicht miteinander gekoppelt. Der Verzahnungskörper 14 liegt in dieser Stellung mit seiner nicht verzahnten Stirnseite 33 an dem Stufenabsatz 34 an, der zwischen dem kleineren Abschnitt 12 und dem angrenzenden Abschnitt des Wellenzapfens 4 gebildet ist. Der Verzahnungskörper 14 weist im Bereich dieser Stirnfläche 33 am Außenumfang eine rampenförmige Anfasung 35 auf. Mit Hilfe dieser Anfasung kann die Größe bzw. axiale Länge der wirksamen Reibfläche zwischen dem Reibbereich 31 des ersten Reibkupplungsteils 23 und des Reibbereichs (Außenfläche) 48 des Verzahnungskörpers 14 bestimmt werden. Die Anfasung dient zusätzlich beim Rückstellen des Verzahnungskörpers 14 von der zweiten axialen Position in die erste axiale Position, der ungehinderten Aufnahme des Verzahnungskörpers 14 im Reibebereich 31 (zweiten Ringabschnitt 28) des ersten Reibkopplungsteils 23. Aus der Figur 5 geht darüber hinaus hervor, dass bei entsprechender Ausrichtung der Permanentmagnete 26 (im vorliegenden Fall weisen die Südpole zum Verzahnungskörper 14) die magnetischen Kraftvektoren derart auf den Verzahnungskörper 14 wirken, dass eine Rückstellkraft auf den Verzahnungskörper 14 einwirkten kann, die diesen in die in Figur 3 gezeigte Stellung zieht. Entsprechend können die Anfasung 35 einen Teil der Aufnahmevorsprünge 30 überlappen, so dass diese nicht mit ihrer kompletten Innenseite zur Anlage mit der Mantelfläche des Verzahnungskörpers 14 kommen, wodurch ein entsprechend schmalerer Reibbereich 31 und somit wirksame Reibfläche mit der Breite B ausgeformt ist.

Des Weiteren ist aus der Figur 3 zu erkennen, dass in der ersten axialen Position die Aufnahmevorsprünge 30 des dritten Reibkupplungsteils 32 und die entsprechend zugehörigen Reibbereiche 31 nicht in Kontakt stehen mit der Mantelfläche des Verzahnungskörpers 14 (und damit nicht mit dem zweiten Reibkupplungsteil 25). Hierzu weist der Verzahnungskörper 14 angrenzend und im Bereich seiner stirnseitigen Profilverzahnung 17 einen umlaufenden Absatz 36 auf. Der Durchmesser des Absatzes 36 und die Federrate des zweiten Ringabschnitts 28 des dritten Reibkupplungsteils 32 sind so gewählt, dass die Magnetkraft der zugehörigen Permanentmagnete 26 nicht ausreicht die Aufnahmevorsprünge 30 gegen den Verzahnungskörper 14 zu ziehen. Deshalb ist das dritte Reibkupplungsteil 32 in der ersten axialen Position der Verzahnungskupplung 15 außer Eingriff. Nachdem das erste Reibkupplungsteil 23 des dritten Reibkupplungsteils mit seinen Aufnahmevorsprüngen 30 an dem Verzahnungskörper 14 anhaftet, wird durch die Haftreibung eine Drehung des Verzahnungskörpers 14 gegenüber dem Kupplungsgehäuse 2 verhindert und der Verzahnungskörper 14 kann bei Stillstand des nicht dargestellten Elektromotors in der ausgekoppelten ersten axialen Position gehalten werden.

Wenn sich der elektrische Motor gegenüber dem Kupplungsgehäuse 2 zu drehen beginnt, entsteht durch die Anziehkraft der Permanentmagnete 26 des ersten Reibkupplungsteils 23 an das weichmagnetische Material des Verzahnungskörpers 14 eine Drehhemmung bzw. ein Bremsmoment, wodurch der Verzahnungskörper 14 aufgrund der Wendelnut 13 und des Gewindestegs 16 axial relativ zur Antriebswelle 5 bewegt wird und in die in Figur 4 gezeigte zweite axiale Position überführt wird. In dieser zweiten axialen Position ist der Verzahnungskörper 14 mit seiner stirnseitigen Profilverzahnung 17 in den stirnseitigen Verzahnungsbereich 21 der Abtriebswelle 19 eingekuppelt. In dieser Stellung kann nunmehr ein Drehmoment von der Antriebswelle 5 auf die Abtriebswelle 19 mit Hilfe der Verzahnungskupplung 15 übertragen werden. Aufgrund der Wendelnut 13 und des darin angeordneten Gewindestegs 16 wird der Verzahnungskörper 14 bei Drehmomentbeaufschlagung durch den elektrischen Motor axial gegen den Verzahnungsbereich 21 der Abtriebswelle 19 gepresst, wodurch es zu einer guten Verzahnung kommt. (Zudem wirkt diese Axialkraft der von unten her wirkendenden Axialkraft, herrührend aus dem Kegelradgetriebe, entgegen. Bei der Übertragung eines Drehmomentes über das Spiralkegelrad 20 entsteht eine axiale Kraft auf das Kegelradgetriebe, welche das Spiralkegelrad 20 axial gegen die Verzahnungskupplung 15 drückt.

Aus der Figur 4 ist auch zu erkennen, dass sich der Verzahnungskörper 14 entlang eines Kupplungswegs K in Richtung der Abtriebswelle 19 bewegt. Der Kupplungsweg K ist so gewählt, dass das erste Reibkupplungsteil 23 in der zweiten axialen Position nicht mehr mit dem Verzahnungskörper 14 im Reibkontakt steht. Des Weiteren ist zu erkennen, dass der Absatz 36 so ausgeformt ist, dass es in der zweiten axialen Position des Verzahnungskörpers 14 der im Durchmesser größere mittlere Abschnitt 37 des Verzahnungskörpers 14 sich mit dem zweiten Ringabschnitt 28 des dritten Reibkupplungsteils 32 überdeckt und es aufgrund der Anziehungskraft durch die Permanentmagnete 36 zur Anlage der zugehörigen Aufnahmevorsprünge 30 des dritten Reibkupplungsteils 32 an dem Verzahnungskörper 14 kommt. Durch die Anlage haftet der erste Reibbereich 31 des dritten Reibkupplungsteils 32 auf dem Verzahnungskörper 14 und das dritte Reibkupplungsteil 32 übt eine gewisse Ausrückhemmung auf den Verzahnungskörper 14 im eingekoppelten Zustand aus.

Wenn sich die Abtriebswelle 19 schneller dreht als die von dem Planetengetriebe 3 untersetzte Drehung des elektrischen Motors wird durch die Sägezahnform der Profilverzahnung 17 des Verzahnungskörpers 14 der Verzahnungskörper 14 axial aus dem Kontakt mit dem Verzahnungsbereich 21 der Abtriebswelle 19 geschoben. Hierfür sorgen insbesondere die Rampenabschnitte der Sägezahnform. Diese Wirkung ergibt sich im Wesentlichen entlang der Höhe H. Nach einer Verschiebung um die Höhe H kommt das dritte Reibkupplungsteil 32 außer Eingriff mit dem Verzahnungskörper 14. Der Verzahnungskörper 14 befindet sich dann bereits in Überdeckung mit dem ersten Reibkupplungsteil 23. Die Magnetkraft der Permanentmagnete 26 des ersten Reibkupplungsteils 23 zieht den weichmagnetischen Verzahnungskörper 14 vollständig aus dem Kupplungsbereich und hält diesen dann in der ausgekoppelten, d.h. der ersten axialen Position, bis sich der Elektromotor erneut oder relativ schneller zu drehen beginnt und durch die Wendelnut 13 und den Gewindesteg 16 der Verzahnungskörper 14 erneut einkoppelt.

Aufgrund der Ausgestaltung des ersten Reibkupplungsteils 23 und des dritten Reibkupplungsteils 32 und der entsprechenden Konturierung und Werkstoffwahl für den Verzahnungskörper 14 wird zum einen eine Rückstelleinrichtung bereitgestellt, die dafür sorgt, dass der Verzahnungskörper 14 bei entsprechenden Betriebszuständen in die erste axiale Position überführt wird. Des Weiteren sorgt insbesondere das dritte Reibkupplungsteil 32 dafür, dass eine gewisse Ausrückhemmung vorhanden ist, die zum Beispiel bei leichter Bergabfahrt, bei der das zu übertragende Drehmoment nahezu Null ist, es nicht unmittelbar zum Auskoppeln des Verzahnungskörpers 14 aus dem Verzahnungsbereich 21 kommt. Falls bspw. aus Sicherheitsüberlegungen ein Auskuppeln bei der Übertragung eines geringen oder keinem Drehmoment gewünscht wird, kann auf ein drittes Reibkupplungsteil verzichtet werden. Bei sämtlichen anderen Betriebszuständen, bei der eine Unterstützung des Elektromotors nicht vorgesehen ist, soll sich der Verzahnungskörper 14 in die erste axiale Position bewegen. Bei Unterstützung durch den Elektromotor soll der Verzahnungskörper 14 die zweite axiale Position einnehmen. Hierdurch ist eine Entkopplung der Abtriebswelle 19 von der Antriebswelle 5 in den gewünschten Betriebszuständen gewährleistet.

Die allgemeine Funktion dieses Aufbaus ist es, den Fahrradfahrer beim Treten zu unterstützen und ihn auf eine höhere Geschwindigkeit zu bringen. Dem Elektromotor wird durch die Kraft des Tretens in die Pedale signalisiert, dass es einer Unterstützung bedarf und der Elektromotor eingekuppelt werden soll. Somit wird der Fahrer bis zu einer definierten Geschwindigkeit durch den Elektromotor unterstützt. Sobald jedoch der Fahrer schneller fährt als die maximale Unterstützung der Geschwindigkeit, soll sich der Motor mechanisch wieder auskuppeln. Ebenso soll der Elektromotor auskuppeln, wenn der Fahrradfahrer rückwärtstritt, die Batterien leer sind, der Motor ausgeschaltet wird oder das Fahrrad Vor- oder Rückwärts geschoben wird.

Dabei ist allen oben genannten Betriebszuständen gemein, dass der Motor eingekuppelt wird, wenn er unterstützend wirken soll und ausgekuppelt wird, wenn er nicht unterstützt. Die Freilaufkupplung dient dabei als mechanisches Kupplungselement zwischen der Antriebsseite (Motorseite) und der Abtriebsseite (Tretlager, Pedale). Vorteilhaft ist jeweils die axial wirkende Verzahnungskupplung 15 mit Sägeverzahnung, welche es erlaubt ein Antriebsmoment in einer definierten Drehrichtung zu übertragen. Die axiale Verschiebung des Verzahnungskörpers 14 mit Hilfe der Wendelnut 13 und des Gewindestegs 16 bzw. eines Spiralsteges bewirkt aufgrund der axialen Sägeverzahnung ein schnelles definiertes Einkoppeln ohne dass Abrieb an den Zähnen beim Einkopplungsvorgang erzeugt wird.

Abtriebsseitig ist an der Abtriebswelle 19 ein komplementärer Verzahnungsbereich 21 mit Sägeverzahnung vorgesehen, welcher ein Gegenelement zum antriebsseitigen Verzahnungskörper 14 darstellt und das Drehmoment vom Elektromotor an das Tretlager abgibt.

Erfindungsgemäß liegt im ausgekoppelten Zustand zwischen Antriebswelle 5 und der Abtriebswelle 19 keine Reibung vor, weil diese vollständig voneinander getrennt sind. Im eingekoppelten Zustand besteht zwischen der Antriebsseite und der Abtriebsseite ein Formschluss durch die Sägeverzahnung, wodurch ebenfalls keine Reibung bzw. Verschleiß zwischen Antrieb und Abtrieb besteht.

Im Folgenden wird anhand der Figuren 6 bis 9 eine zweite Ausführungsform der vorliegenden Erfindung beschrieben. Es soll in der Folge nur auf die wesentlichen konstruktiven Unterschiede zum vorangegangenen Ausführungsbeispiel eingegangen werden. Aus diesem Grunde wird für bau- und wirkungsgleiche Elemente ergänzend auf die obige Ausführungsform Bezug genommen und soweit möglich die gleichen Bezugsziffern verwendet.

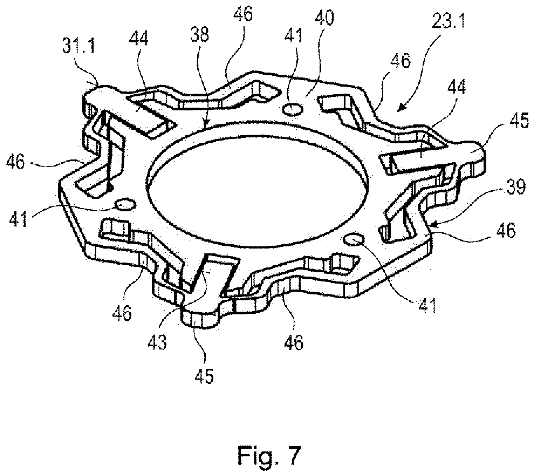

Figur 6 zeigt eine weitere Ausführungsvariante einer Freilaufkupplung 1 zum Ein- und Auskuppeln eines Motors, insbesondere eines Fahrradmotors. Die Freilaufkupplung 1 umfasst eine mit dem Motor verbindbaren Antriebsseite, und eine in Abhängigkeit eines Betriebszustands mit dem Motor koppelbaren Abtriebsseite. Ferner eine axial wirkende Verzahnungskupplung 15 und eine Reibeinrichtung. Die Antriebsseite weist einen entlang eines axialen Kupplungswegs K verschiebbar angeordneten Verzahnungskörper 14 der Verzahnungskupplung 15 auf. Der Verzahnungskörper 14 der Verzahnungskupplung 15 ist zwischen einer ersten axialen Position und einer zweiten axialen Position verschiebbar. Die Abtriebsseite weist einen Verzahnungsbereich 21 auf, welcher in der zweiten axialen Position mit dem Verzahnungskörper 14 gekuppelt ist. In der gezeigten ersten axialen Position ist der Verzahnungsbereich 21 vollständig vom Verzahnungskörper 14 entkuppelt. Die Reibeinrichtung ist als Reibkupplung 24 ausgebildet. Die Reibkupplung 24 umfasst ein erstes Reibkupplungsteil23.1 mit mindestens einen Reibbereich 31.1 und ein zweites Reibkupplungsteil 25.1 mit einem Reibbereich 48.1. Der Reibbereich 31.1 des erstes Reibkupplungsteil 23.1 steht wie in der Figur gezeigt mit dem Reibbereich 48.1 des zweiten Reibkupplungsteil 25.1 in der ersten axialen Position in Reibkontakt. Der Wechsel des Verzahnungskörpers 14 von der ersten axialen Position zu der zweiten axialen Position wird durch die Reibkupplung 24 ausgelöst. In der zweiten axialen Position des Verzahnungskörpers 14 ist der Reibbereich 31.1 des ersten Reibkupplungsteil 23.1 zu dem Reibbereich 48.1 des zweiten Reibkupplungsteil 25.1 außer Kontakt gebracht. Diese zweite axiale Position ist in der Figur 6 nicht gezeigt. Weitere Details, zu dem in der Figur 6 gezeigten Ausführungsbeispiel sind in den Figuren 7-9 beschrieben. Der wesentliche Unterschied zum ersten Ausführungsbeispiel besteht in der Ausgestaltung der Reibkupplung 24. Diese verwendet im vorliegenden Ausführungsbeispiel der Figuren 6 bis 9 keine Permanentmagnete. Es wird auch kein drittes Reibkupplungsteil verwendet, das mit dem Verzahnungskörper in und außer Kontakt bringbar ist. Darüber hinaus sind im Unterschied zum vorhergehend beschriebenen Ausführungsbeispiel die Wendelnut 13 an der Innenseite des Verzahnungskörpers 14 und der komplementäre Gewindesteg (Spiralsteg) 16 an dem kleineren Abschnitt 12 der Antriebswelle 5 angeordnet. Diese Anordnung der Wendelnut 13 des Gewindestegs 16 ist jedoch nicht wesentlich, könnte jedoch auch wie im vorhergehend beschriebenen Ausführungsbeispiel erfolgen.

Das erste Reibkupplungsteil 23.1 weist einen inneren Ring 38 und einen äußeren Ring 39 auf, die mittels dreier Stege 40 miteinander verbunden sind. Im Bereich der Stege 40 befinden sich Befestigungsöffnungen 41 mittels derer das erste Reibkupplungsteil 23.1 an einer Stirnseitenstufe 42 des Verzahnungskörpers 14 befestigt ist. Der innere Ring 38 weist an seinem Außenumfang drei gleichmäßig verteilt, zwischen den Stegen 40 angeordnete und nach außen hin offene Führungsaussparungen 43 auf. Der äußere Ring 39 weist zu den Führungsaussparungen 43 komplementär ausgeformte Führungszapfen 44 auf, die an ihrem äußeren Ende in Druckstücke 45 übergehen, die an ihren Stirnseiten die Reibbereiche 31.1 formen. Die Führungszapfen 44 zusammen mit den Druckstücken 45 sind jeweils auf beiden Seiten mit Biegebalkenabschnitten 46 mit dem jeweils benachbarten Steg 40 verbunden. Diese Biegebalkenabschnitte 46, die sich jeweils zwischen einem Steg 40 und einem Übergangsbereich zwischen Druckstück 45 und Führungszapfen 44 erstrecken, weisen eine Art S-Form auf und verjüngen sich im Querschnitt ausgehend vom Steg 40 in Richtung Druckstück 45 und Führungszapfen 44. Aufgrund dieser federnd ausgestalteten Biegebalkenabschnitte 46, die beidseitig an dem Druckstück 45 und dem Führungszapfen 44 angeordnet sind, können sich die Druckstücke 45 durch die Führungszapfen 44 in den Führungsaussparungen 43 geführt, radial nach außen und innen bewegen. Die Biegebalkenabschnitte 46 sorgen dabei für eine Art federnde Aufhängung der Druckstücke 45 mit den Führungszapfen 44. Die S-Form der Biegebalkenabschnitte 46 dient der Minimierung des zweiachsigen Spannungszustands im Biegequerschnitt und zur Verlängerung des Biegebalkens. Der Spalt zwischen dem Führungszapfen 44 und der Führungsaussparung 43 beträgt einseitig im vorliegenden Ausführungsbeispiel ca. 0,15 mm.

Das in Figur 7 dargestellte erste Reibkupplungsteil 23.1 kann aus einem Blech ideal durch Laserschneiden hergestellt werden. Bei dieser Ausgestaltung wird im Wesentlichen ein sogenanntes Festkörpergelenk (FKG) geformt, welches durch die Laserschneidtechnologie sehr günstig in der Herstellung ist. Darüber hinaus kann die Radialkraft-Federkonstante mit FEM sehr einfach ermittelt werden.

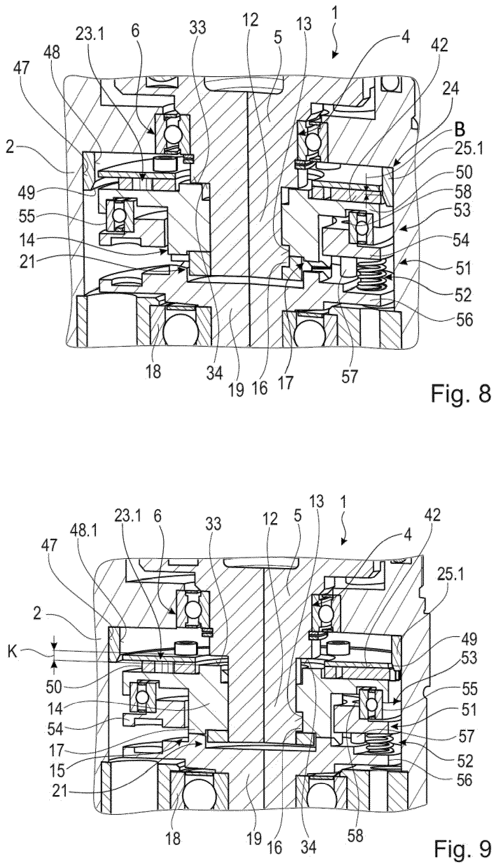

Das zweite Reibkupplungsteil 25.1 wird im vorliegenden Fall von einem einfachen Ring, bspw. einem Bronze Ring gebildet, der in einen entsprechenden Absatz 47 in das Kupplungsgehäuse 2 eingepresst ist. In Fig. 8 ist der Verzahnungskörper 14 in seiner ausgekuppelten, ersten axialen Position dargestellt. In dieser liegt die Stirnseite 33 des Verzahnungskörpers 14 an dem Stufenabsatz 34 der Antriebswelle 5 an. Das erste Reibkupplungsteil 23.1 ist dann innerhalb des zweiten Reibkupplungsteils 25.1 angeordnet und die Druckstücke 45 drücken mit den Reibbereichen 31.1 gegen den Reibbereich (Innenseite) 48.1 des ringförmigen zweiten Reibkupplungsteils 25.1. Die Druckstücke 45 sind in dieser Stellung leicht eingefedert, so dass eine vorbestimmte Kraft der Druckstücke 45 auf den Reibbereich (Innenseite) 48.1 des zweiten Reibkupplungsteils 25.1 ausgeübt wird. Diese Anpressung wird benötigt, damit eine Drehhemmung des Verzahnungskörpers 14 bewirkt wird bzw. auf den Verzahnungskörper 14 ausgeübt wird. Diese Drehhemmung wird für eine Einkupplung benötigt. Durch die Verjüngung der Biegebalkenabschnitte 46 zu den Druckstücken 45 hin wird erreicht, dass die Biegespannung über die gesamte Biegebalkenlänge im Wesentlichen konstant bleibt. Durch die S-förmige Federbalkenkonstruktion entsteht kein zweiachsiger Spannungszustand in den Biegebalkenabschnitten 46. Hierdurch wird eine im Wesentlichen lineare Federkennlinie erreicht. Um eine unnötig starke Reibung bzw. unnötig starken Verschleiß zu verhindern, wodurch ein ungewollter Widerstand entstehen würde, wird das ringförmige zweite Reibkupplungsteil 25.1 aus Bronze gefertigt.

Das ringförmige zweite Reibkupplungsteil 25.1 weist an seinem dem Verzahnungskörper 14 zugewandten Ende eine kegelförmige Anfasung 49 an dem Reibbereich 48.1 auf. Diese kegelförmige Anfasung 49 dient als Auflaufschräge für das erste Reibkupplungsteil 23.1.

Zur Anbringung des ersten Reibkupplungsteils 23.1 weist der Verzahnungskörper 14 einen radial vorstehenden Flansch 50 auf, der auch die Stirnseitenstufe 42 formt. Die hier gezeigte Ausführungsform verfügt über eine mechanische Rückstelleinrichtung 51, die im vorliegenden Ausführungsbeispiel eine aus drei gleichmäßig verteilt angeordneten Druckfedern bestehende Federeinrichtung 52 und eine ringförmige Rotationsentkopplungseinrichtung 53 umfasst. Die Rotationsentkopplungseinrichtung 53 weist einen koaxial und im Abstand zum Verzahnungskörper 14 angeordneten Ring 54 und ein Wälzkörperlager 55 auf. Das Wälzkörperlager 55 stützt sich einseitig mit seinem inneren Lagerring an dem Ring 54 und mit seinem äußeren Lagerring an dem entsprechend ausgeformten Flansch 50 des Verzahnungskörpers 14 ab. Hierdurch ist eine Drehentkopplung zwischen dem Ring 54 und dem Verzahnungskörper 14 geschaffen. Die Federeinrichtung 52 stützt sich einseitig an einem Flansch 56 der Abtriebswelle 19 und andersseitig an dem Ring 54 ab. Die Rückstelleinrichtung 51 kann daher eine drehentkoppelte Axialkraft zwischen der Abtriebswelle 19 und dem Verzahnungskörper 14 aufbringen. Im Ergebnis muss nur die Reibung des Wälzkörperlagers 55 aufgebracht werden, um die Rückstellwirkung der Rückstelleinrichtung 51 in die in Figur 7 gezeigte erste axiale Position zu erzielen.

Ist nunmehr eine Unterstützung durch den Elektromotor gefordert, kommt es zu einer Drehung der Antriebswelle 5 bzw. des Verzahnungskörpers 14 aufgrund der Bremswirkung bzw. Hemmung durch die Reibung des ersten Reibkupplungsteils 23.1 an dem zweiten Reibkupplungsteil 25.1. Durch das dadurch erzielte rotatorische Haltemoment bewegt sich der Verzahnungskörper 14 aufgrund der Wendelnutführung in axialer Richtung relativ zur Antriebswelle 5 in die, in Figur 9 gezeigt, eingekoppelte zweite axiale Position. Die Profilverzahnung 17 und der Verzahnungsbereich 21 sind im Wesentlichen identisch zum vorangegangenen Ausführungsbeispiel ausgestaltet. Der dabei zurückgelegte axiale Kupplungsweg K ist dabei so bemessen, dass das erste Reibkupplungsteil 23.1 außer Eingriff mit dem zweiten Reibkupplungsteil 25.1 kommt. Das bedeutet, dass in der in Figur 9 gezeigten zweiten axialen Position keine Reibsituation zwischen dem ersten Reibkupplungsteil 23.1 und dem zweiten Reibkupplungsteil 25.1 vorliegt. Zusätzlich stehen der Verzahnungskörper 14, die Rotationsentkopplungseinrichtung 53 und die Abtriebswelle 19 relativ zueinander still bzw. drehen mit gleicher Geschwindigkeit. Es liegt demnach auch zwischen diesen Elementen keine Reibsituation vor.

Radial außerhalb des Verzahnungsbereichs 21 kann die Abtriebswelle 19 mit zwei axial vorstehenden stiftförmigen Führungselementen 57 versehen sein. Diese erstrecken sich in Öffnungen 58 im Ring 54. Diese Führungselemente 57 können relativ zu der Federeinrichtung 52 so positioniert sein, dass die Achse des Rings 54 in der eingekoppelten Position der Verzahnungskupplung 15 gegenüber der Achse des Verzahnungskörpers 14 ca. 2 bis 5° präzediert (nicht mehr achsparallel ist). Diese einfache Funktion hemmt das Auskoppeln der Verzahnungskupplung 15, damit sie auch bei leichter Talfahrt (bei Drehmoment an der Antriebsseite von ungefähr 0) nicht auskoppelt. Diese Funktion kann auch durch eine sogenannte Hinterschleifung der senkrechten Sägezahnflanken erreicht werden, ist aber frästechnisch aufwendig.

Aufgrund der hier vorgestellten Ausführungsformen findet eine Reibwirkung der Reibkupplung 24 nur zur Erzielung einer Drehhemmung beim axialen Bewegen des Verzahnungskörpers 14 statt. Insbesondere in der zweiten axialen Position, der eingekoppelten Position des Verzahnungskörpers 14 kuppelt die Reibkupplung 24 zumindest an der Antriebsseite aus, so dass das erste Reibkupplungsteil 23.1 und das zweite Reibkupplungsteil 25.1 nicht miteinander in Kontakt stehen. Während der Unterstützung durch den Elektromotor tritt daher keine Reibung zwischen dem ersten und zweiten Reibkupplungsteil 23.1 und 25.1 auf. In der ersten axialen Position findet ohnehin keine Relativbewegung zwischen dem ersten Reibkupplungsteil 23.1 und dem zweiten Reibkupplungsteil 25.1 statt, wenn der Motor nicht unterstützt.

Das erste Reibkupplungsteil 23.1 und die Federeinrichtung 52 sind so auszulegen, dass sie entlang der Betriebszustände wechselnd gegeneinander wirken können (Federkraft versus reibungsbedingte Axialbewegung des Verzahnungskörpers 14 aufgrund der Wendeinutführung). Anstelle der dargestellten Federeinrichtung 52, die aus mehreren um die Achse verteilt angeordneten Druckfedern gebildet ist, kann auch eine einzige koaxial angeordnete Druckfeder verwendet werden, in deren Inneren sich der Verzahnungskörper 14 axial bewegen kann.

Weitere Ausführungsbeispiele umfassen eine Freilaufkupplung 1 zum Ein- und Auskuppeln eines Motors,
mit einer mit dem Motor verbindbaren Antriebsseite,
mit einer in Abhängigkeit eines Betriebszustands mit dem Motor koppelbaren Abtriebsseite,
mit einer axial wirkenden Verzahnungskupplung 15 und
mit einer Reibeinrichtung,
wobei die Antriebsseite einen entlang eines axialen Kupplungswegs K zwischen einer ersten axialen Position und einer zweiten axialen Position verschiebbar angeordneten Verzahnungskörper 14 der Verzahnungskupplung 15 aufweist,
wobei die Abtriebsseite einen Verzahnungsbereich 21 aufweist, welcher in der zweiten axialen Position mit dem Verzahnungskörper 14 gekuppelt ist, und der Verzahnungsbereich 21 in der ersten axialen Position vollständig vom Verzahnungskörper 14 entkuppelt ist,
wobei die Reibeinrichtung als Reibkupplung 24 ausgebildet ist, und die Reibkupplung ein erstes Reibkupplungsteil 23, 23.1 mit mindestens einem Reibbereich 31, 31.1 und ein zweites Reibkupplungsteil 25, 25.1 mit einem Reibbereich 48, 48.1 umfasst,
wobei der Reibbereich 31, 31.1 des erstes Reibkupplungsteil 23, 23.1 mit dem Reibbereich 48, 48.1 des zweiten Reibkupplungsteils 25, 25.1 in der ersten axialen Position in Reibkontakt steht, und wobei der Wechsel des Verzahnungskörpers 14 von der ersten axialen Position zu der zweiten axialen Position durch die Reibkupplung 24 ausgelöst ist und in der zweiten axialen Position des Verzahnungskörpers 14 der Reibbereich 31, 31.1 des ersten Reibkupplungsteil 23, 23.1 zu dem Reibbereich 48, 48.1 des zweiten Reibkupplungsteil 25, 25.1 außer Kontakt gebracht ist.

Sowohl in der ersten axialen Position wie auch in der zweiten axialen Position der Freilaufkupplung besteht keine Gleitreibung zwischen Kupplungsteilen und/oder zwischen der Antriebsseite und der Abtriebsseite. Somit werden in der ersten, wie auch in der zweiten axialen Position keine oder lediglich sehr geringe Reibverluste in der Kupplung erzeugt. Dadurch weist die Kupplung einen hohen Wirkungsgrad auf. Die geringen Reibverluste sind insbesondere bei E-Bike-Kupplungen in jenen Betriebszuständen vorteilhaft in welchen der Motor nicht mit dem Abtrieb gekoppelt ist und der Fahrradfahrer ein leichtgängiges Antriebssystem erwartet bzw. die Leichtgängigkeit einfach prüfen kann. Die Kupplung benötigt lediglich für den Wechsel von der ersten in die zweite axiale Position eine gewisse Reibenergie, welche in der erfindungsgemäßen Freilaufkupplung durch die Reibeinrichtung bereitgestellt wird. Die Reibeinrichtung umfasst die Reibkupplung. Diese übt eine Drehhemmung auf den Verzahnungskörper aus, wodurch dieser eine axiale Bewegung von der ersten axialen Position in die zweite axiale Position ausführt.

Selbstverständlich bestehen wie immer bei bewegten und rotierenden Teilen gewisse Verluste bspw. durch Luftreibung sowie die Lagerung der Bauteile. Die Lagerreibungsverluste sind jedoch insbesondere bei Wälzlager weniger auf Gleitreibung, sondern vielmehr auf Rollreibung zurückzuführen.

In einer vorteilhaften Ausgestaltung weist die Verzahnungskupplung 15 eine Hirth-Verzahnung auf. Eine Hirth-Verzahnung ermöglicht eine zuverlässige Kraftübertragung zwischen zwei Wellenenden. Durch die Hirth-Verzahnung findet eine formschlüssige Kraftübertragung zwischen den Wellenenden statt.

In einer weiteren vorteilhaften Ausgestaltung weist die Verzahnungskupplung 15 zusätzlich eine Sägezahnverzahnung auf. Durch die Sägezahnverzahnung kann die Kupplung der Antriebsseite mit der Abtriebsseite auch bei einer höheren Drehzahl der Antriebswelle gegenüber der Abtriebswelle mit geringer Axialkraft zuverlässig erfolgen. Die Sägezahnverzahnung ist dabei derart angeordnet, dass in einer Antriebsrichtung und damit bei einer höheren Drehzahl der Antriebsseite gegenüber der Abtriebsseite eine Kupplung zwischen Antriebsseite und Abtriebsseite ohne große Axialkraft möglich ist. In dieser Antriebsrichtung weist sie Sägezahnverzahnung steile Flanken auf, diese ermöglichen eine gute Drehmomentübertragung ohne das Axialkräfte die Kupplung auseinander drücken.

Die Sägezahnverzahnung weist gegenüber der steilen Flanke eine Schrägflanke auf. Auf die Schrägflanke wird bei einer entgegen der Antriebsrichtung wirkende Drehung ein Drehmoment ausgeübt. Dabei entsteht durch die Schräge der Sägezahnverzahnung eine Axialkraft zwischen der Antriebsseite und der Abtriebsseite, welche die Wellendenden der Antriebsseite und der Abtriebsseite auseinanderschiebt und wodurch die Verbindung zwischen den Wellenenden getrennt und die Kupplung gelöst wird. Bspw. bei einer Drehrichtungsumkehr ist dieser Effekt erwünscht. Die Wellen werden dabei aufgrund der Schrägverzahnung ohne zusätzliche Unterstützung auseinandergeschoben, und die gekuppelte Verbindung gelöst.

Der Wechsel von einer ersten in eine zweite axiale Position und/oder von der zweiten axialen Position in die erste axiale Position erfolgt ohne externe Energiezufuhr bspw. in der Form einer elektrischen Energiequelle oder eine elektromechanische Auslösung. Die Auslösung des Wechsels erfolgt durch die mechanische Reibung, welche in der Reibkupplung erzeugt wird.

In Ausführungsbeispielen verfährt die Kupplung bei Stilstand der Antriebsseite der Verzahnungskörper 14 von der zweiten axialen Position in die erste axiale Position. Wenn sich der Verzahnungskörper 14 bereits in der ersten axialen Position befindet, verbleibt der Verzahnungskörper in der ersten axialen Position. Dadurch ist beim Ausfall der Unterstützung durch den Motor gewährleistet, dass der Motor nicht durch den Fahrer des Fahrrades mit angetrieben werden muss.

Ferner kann beim Stillstand der Antriebsseite und der Abtriebsseite der Verzahnungskörper 14 von der zweiten axialen Position in die erste axiale Position verfahren. Wenn der Verzahnungskörper 14 bereits in der ersten axialen Position ist, verbleibt der Verzahnungskörper 14 in der ersten axialen Position. Bspw. aus sicherheitstechnischen Überlegungen kann es notwendig sein, den Antrieb nur dann mit dem Abtrieb zu verbinden, wenn dieser ein Drehmoment übertragen soll und in jedem anderen Betriebszustand den Antrieb vom Abtrieb zu trennen.

Weiter verfährt der Verzahnungskörper 14 bei einer höheren Drehzahl der Abtriebsseite gegenüber der Antriebsseite von der zweiten axialen Position in die erste axiale Position. Falls sich der Verzahnungskörper bereits in der ersten axialen Position befindet, verbleibt er in der ersten axialen Position. Dieser Fall tritt beispielsweise ein, wenn der Fahrradfahrer schneller fährt als die maximal zulässige Unterstützung durch den Motor bspw. gesetzlich zulässig ist. In diesem Fall soll der Motor nicht als bremsend wahrgenommen werden und deshalb vom Abtrieb getrennt werden.

Auch verfährt beim Rückwärtsdrehen der Antriebsseite der Verzahnungskörper 14 von der zweiten axialen Position in die erste axiale Position. Wenn der Verzahnungskörper 14 sich bereits in der ersten axialen Position befindet, verbleibt er der ersten axialen Position. Um einen klar ausgekuppelten Zustand zu erreichen kann der Motor kurz rückwärtsgedreht werden. Dadurch wird sowohl durch die Wendelführung als auch durch die Schrägverzahnung der Verzahnungskupplung die Abtriebsseite von der Antriebsseite getrennt.

Wenn die Abtriebsseite rückwärts gedreht wird, bspw. beim Rückwärtsdrehen der Pedale oder beim rückwärtsschieben des Fahrrades verfährt der Verzahnungskörper 14 ebenfalls in die erste axiale Position. Wenn der Verzahnungskörper 14 sich bereits in der ersten axialen Position befindet, verbleibt er der ersten axialen Position. Dadurch soll ebenfalls verhindert werden, dass der Fahrradfahrer das Gefühl bekommt, der Motor müsse als Last unnötig mitgedreht werden, bzw. der Motor behindere die Leichtgängigkeit des Fahrrades.

### Bezugszeichenliste

- 1: Kupplung
- 2: Kupplungsgehäuse
- 3: Planetengetriebe
- 4: Wellenzapfen
- 5: Antriebswelle
- 6: Wälzkörperlager
- 7: Planetenträger
- 8: Planetenräder
- 9: Lager
- 10: Hohlrad
- 11: Wälzkörperlager
- 12: kleinerer Abschnitt
- 13: Wendelnut
- 14: Verzahnungskörper
- 15: Verzahnungskupplung
- 16: Gewindesteg
- 17: Profilverzahnung
- 18: Wälzkörperlager
- 19: Abtriebswelle
- 20: Spiralkegelrad
- 21: Verzahnungsbereich
- 22: Sicherungsring
- 23: erstes Reibkupplungsteil (mag. Variante)
- 23.1: erstes Reibkupplungsteil (mech. Variante)
- 24: Reibkupplung
- 25: zweites Reibkupplungsteil (mag. Variante)
- 25.1: zweites Reibkupplungsteil (mech. Variante)
- 26: Permanentmagnet
- 27: erster Ringabschnitt
- 28: zweiter Ringabschnitt
- 29: Steg
- 30: Aufnahmevorsprünge
- 31: Reibbereich des ersten Reibkupplungsteils 23 (mag. Variante)
- 31.1: Reibbereich des ersten Reibkupplungsteils 23.1 (mech. Variante)
- 32: drittes Reibkupplungsteil (mag. Variante)
- 33: Stirnseite
- 34: Stufenabsatz
- 35: Anfasung
- 36: Absatz
- 37: mittlerer Abschnitt
- 38: innerer Ring
- 39: äußerer Ring
- 40: Steg
- 41: Befestigungsöffnung
- 42: Stirnseitenstufe
- 43: Führungsaussparungen
- 44: Führungszapfen
- 45: Druckstücke
- 46: Biegebalkenabschnitt
- 47: Absatz
- 48: Reibbereich des zweiten Reibkupplungsteils 25 (mag. Variante)
- 48.1: Reibbereich des zweiten Reibkupplungsteils 25.1 (mech. Variante)
- 49: kegelförmige Anfasung
- 50: Flansch
- 51: Rückstelleinrichtung
- 52: Federeinrichtung
- 53: Rotationsentkopplungseinrichtung
- 54: Ring
- 55: Wälzkörperlager
- 56: Flansch
- 57: Führungselemente
- 58: Öffnungen
- K: Kupplungsweg
- H: Verzahnungshöhe
- A: Kupplungsachse
- B: max. Breite der wirksamen Reibfläche

## Patentansprüche

1. Freilaufkupplung (1) zum Ein- und Auskuppeln eines Motors, mit einer mit dem Motor verbindbaren Antriebsseite, mit einer in Abhängigkeit eines Betriebszustands mit dem Motor koppelbaren Abtriebsseite, mit einer axial wirkenden Verzahnungskupplung (15) und mit einer Reibeinrichtung, wobei die Antriebsseite einen entlang eines axialen Kupplungswegs (K) zwischen einer ersten axialen Position und einer zweiten axialen Position verschiebbar angeordneten Verzahnungskörper (14) der Verzahnungskupplung (15) aufweist, wobei die Abtriebsseite eine in der zweiten axialen Position mit dem Verzahnungskörper (14) verbundenen Verzahnungsbereich (21) der Verzahnungskupplung (15) aufweist, und wobei die Reibeinrichtung mit dem Verzahnungskörper (14) in Wirkbeziehung steht, **dadurch gekennzeichnet, dass** die Reibeinrichtung als Reibkupplung (24) ausgebildet ist und ein erstes Reibkupplungsteil (23, 23.1), welches mindestens einen Reibbereich (31, 31.1) umfasst und ein zweites Reibkupplungsteil (25, 25.1), welches einen Reibbereich (48, 48.1) umfasst, welcher mit dem mindestens einen Reibbereich (31, 31.1) des ersten Reibkupplungsteils (23, 23.1) in Reibkontakt bringbar ist, und die Reibkupplung (24) derart konfiguriert ist, dass der mindestens eine Reibbereich (31, 31.1) des ersten Reibkupplungsteils (23, 23.1) beim Verschieben des Verzahnungskörpers (14) von der ersten axialen Position zur zweiten axialen Position und/oder von der zweiten axialen Position zur ersten axialen Position in mindestens einer Zwischenposition des axialen Kupplungswegs (K) des Verzahnungskörpers (14) sich relativ zu dem zweiten Reibkupplungsteil (25, 25.1) bewegt und eine Drehhemmung auf den Verzahnungskörper (14) ausübt und in der zweiten axialen Position des Verzahnungskörpers (14) das erste Reibkupplungsteil (23, 23.1) außer Kontakt mit dem zweiten Reibkupplungsteil (25, 25.1) gebracht ist

2. Freilaufkupplung (1) nach Anspruch 1, **dadurch gekennzeichnet, dass** das erste Reibkupplungsteil (23, 23.1) derart ausgestaltet ist, dass der mindestens eine Reibbereich (31, 31.1) radial ein- und/oder ausfedernd ausgestaltet ist.

3. Freilaufkupplung (1) nach Anspruch 1 oder 2, **dadurch gekennzeichnet, dass** das zweite Reibkupplungsteil (25, 25.1) eine umlaufende Reibfläche aufweist, die mit dem mindestens einen Reibbereich (31, 31.1) des ersten Reibkupplungsteils (23, 23.1) in und außer Kontakt bringbar ist.

4. Freilaufkupplung (1) nach einem der Ansprüche 1 bis 3, **dadurch gekennzeichnet, dass** die max. Breite (B) einer wirksamen Reibfläche zwischen erstem und zweitem Reibkupplungsteil (23, 23.1; 25, 25.1) kleiner ist als der axiale Kupplungsweg (K).

5. Freilaufkupplung (1) nach einem der Ansprüche 1 bis 4, **dadurch gekennzeichnet, dass** der Verzahnungskörper (14) mittels einer Wendelnutführung auf einem Wellenzapfen (4) der Antriebsseite verschiebbar geführt ist.

6. Freilaufkupplung (1) nach einem der Ansprüche 4 oder 5, **dadurch gekennzeichnet, dass** der Verzahnungskörper (14) und der Verzahnungsbereich (21) der Verzahnungskupplung (15) komplementäre Sägezahnprofilierungen aufweisen.

7. Freilaufkupplung (1) nach einem der Ansprüche 1 bis 6, **dadurch gekennzeichnet, dass** eine axial wirkende Rückstelleinrichtung (51) vorgesehen ist, die eine axiale Rückstellkraft auf den Verzahnungskörper (14) ausübt, wobei mittels der Rückstellkraft der Verzahnungskörper (14) im Betriebszustand fehlender Motorunterstützung in seine erste axiale Position bewegbar ist.

8. Freilaufkupplung (1) nach Anspruch 7, **dadurch gekennzeichnet, dass** die Rückstelleinrichtung (51) eine axial oder achsparallel wirkende Federeinrichtung (52) aufweist, die sich einseitig an der Abtriebsseite abstützt, und eine Rotationsentkopplungseinrichtung (53) aufweist, wobei sich die Federeinrichtung (52) anderseitig unter Zwischenfügung der Rotationsentkopplungseinrichtung (53) an dem Verzahnungskörper (14) abstützt, wobei die Rotationsentkopplungseinrichtung (53) eine Lagereinrichtung umfasst, mittels derer die Federeinrichtung (52) und der Verzahnungskörper (14) reibarm relativ zueinander um die Kupplungsachse (A) verdrehbar sind.

9. Freilaufkupplung (1) nach Anspruch 7 oder 8, **dadurch gekennzeichnet, dass** der Verzahnungskörper (14) verdrehfest mit dem ersten Reibkupplungsteil (23.1) verbunden oder einteilig mit diesem ausgestaltet ist und das zweite Reibkupplungsteil (25.1) mit der umlaufenden Reibfläche (48.1) mit einem Kupplungsgehäuse (2) verbunden ist.

10. Freilaufkupplung (1) nach Anspruch 8 oder 9, **dadurch gekennzeichnet, dass** die Rotationsentkopplungseinrichtung (53) an der Abtriebsseite derart geführt ist, dass zwischen der ersten axialen Position und der zweiten axialen Position des Verzahnungskörpers (14) eine Verlagerung der Achse der Rotationsentkopplungseinrichtung (53) relativ zur Achse des Verzahnungskörpers (14) stattfindet und eine Auskopplungshemmung für die Verzahnungskupplung (15) bewirkt ist.

11. Freilaufkupplung (1) nach einem der Ansprüche 1 bis 7, **dadurch gekennzeichnet, dass** das zweite Reibkupplungsteil (25) von dem Verzahnungskörper (14) gebildet oder mit diesem fest verbunden ist und das erste Reibkupplungsteil (23) mit einem Kupplungsgehäuse (2) verbunden ist.

12. Freilaufkupplung (1) nach Anspruch 11, **dadurch gekennzeichnet, dass** das erste Reibkupplungsteil (23) einen dem mindestens einen Reibbereich (31) zugeordneten Permanentmagneten (26) aufweist und das zweite Reibkupplungsteil (25) ferromagnetisch ausgestaltet ist.

13. Freilaufkupplung (1) nach Anspruch 11 oder 12, **dadurch gekennzeichnet, dass** ein drittes Reibkupplungsteil (32) mit mindestens einem Reibbereich (31) vorgesehen ist, das im Abstand zum ersten Reibkupplungsteil (23) versetzt entlang der Kupplungsachse (A) und mit der Abtriebsseite verbunden angeordnet ist, wobei das erste Reibkupplungsteil (23) im Bereich der ersten axialen Position mit dem zweiten Reibkupplungsteil (25) im Reibkontakt steht und das dritte Reibkupplungsteil (32) im Bereich der ersten axialen Position außer Kontakt mit dem zweiten Reibkupplungsteil (25) steht, und wobei das dritte Reibkupplungsteil (32) im Bereich der zweiten axialen Position in Reibkontakt mit dem zweiten Reibkupplungsteil (25) steht und das erste Reibkupplungsteil (23) im Bereich der zweiten axialen Position außer Kontakt mit dem zweiten Reibkupplungsteil (25) steht.

14. Antriebsvorrichtung für ein personenangetriebenes Fahrzeug mit einem unterstützenden Elektromotor, mit einer mit dem Elektromotor verbundenen Antriebswelle (5), einer Abtriebswelle (19) und einem zwischen der Antriebswelle (5) und der Abtriebswelle (19) wirkenden Freilaufkupplung (1) nach einem der Ansprüche 1 bis 13, wobei ein Verzahnungskörper (14) einer Verzahnungskupplung (15) der Freilaufkupplung (1) auf der Antriebswelle (5) angeordnet ist und ein Verzahnungsbereich (21) der Verzahnungskupplung (15) der Freilaufkupplung (1) an der Abtriebswelle (19) angeordnet ist.

15. Fahrrad mit einer Antriebsvorrichtung nach Anspruch 14.
